# EUROPEAN PATENT SPECIFICATION

(11) **EP 2 463 793 B1**
(45) Date of publication and mention of the grant of the patent: **25.12.2019**
(21) Application number: 10405222.0
(22) Date of filing: 17.11.2010
(51) Int. Cl.: G06F 17/50

(54) **Method and computing system for designing a formed sheet metal part**
Verfahren und Computeranlage zum Entwerfen eines tiefgezogenen Metallblechteils
Procédé et système informatique pour la conception d'une tôle métallique emboutie

(43) Date of publication of application: 13.06.2012
(73) Proprietor: Autoform Engineering GmbH, 8832 Wilen b. Wollerau (CH)
(72) Inventor: Kubli, Waldemar, 8173 Neerach (CH)
(74) Representative: Frei Patent Attorneys

(56) References cited:
- WO-A2-2010/033929
- B. Miller, R. Bond: "The practical use of simulation in the sheet metal forming industry", Wilde FEA Ltd. , 2001, XP002621095, Retrieved from the Internet: URL:http://citeseerx.ist.psu.edu/viewdoc/s ummary?doi=10.1.1.118.813 [retrieved on 2011-02-08]
- SHI X ET AL: "Simulation of sheet metal forming by a one-step approach: Choice of element", JOURNAL OF MATERIALS PROCESSING TECHNOLOGY 20010117 ELSEVIER SCIENCE S.A., vol. 108, no. 3, 17 January 2001 (2001-01-17), pages 300-306, XP002621096, DOI: DOI:10.1016/S0924-0136(00)00846-3
- WANG Y ET AL: "Research on applying one-step simulation to blank design in sheet metal forming", JOURNAL OF MATERIALS PROCESSING TECHNOLOGY 20020115 ELSEVIER LTD GB, vol. 120, no. 1-3, 15 January 2002 (2002-01-15), pages 111-114, XP002621097, DOI: DOI:10.1016/S0924-0136(01)01197-9

## Description

The invention relates to a method and computing system for designing a formed sheet metal part as described in the preamble of the corresponding independent claims.

### BACKGROUND OF THE INVENTION

Formed metal parts and in particular formed sheet metal parts are manufactured in multicomponent forming presses by deep drawing, restriking, folding, trimming, etc., involving different forming tools.

For the configuration of metal forming tools (for example, punches, dies, and blank holders), as well as for the configuration of metal forming processes (for example, tool forces, draw beads, lubrication, shape, and material for the sheet metal blank), CAD/CAE (computer aided design/computer aided engineering) programs are utilized. These simulate and model, respectively, a metal forming process by means of finite elements (FEM) on the basis of simulation parameters. Simulation parameters describe
- the geometry or shape of the forming tools utilized in the metal-forming process,
- process parameters or metal-forming parameters, such as the lubrication, processing forces, etc.
- material parameters of the material being formed, such as thickness, rolling direction, physical characteristics etc.

The simulation programs create, by numerical simulation, result values comprising a description of the geometry of a sheet metal part after the forming process as well as the distribution of state variables, such as elongations and stresses in the formed sheet metal part. They also may calculate, from the result values, values of certain characteristic variables, called performance variables, which express a quality of the formed sheet metal part. Different types of performance variables and visual representations of the result values and performance variables can be computed and displayed in a post-simulation analysis. Correspondingly, further sets of parameters are used to control the numerical simulation itself (control parameters) and to control different types of post-simulation analysis (analysis parameters).

An important parameter in forming processes is the restraining force since it affects the flow of material in most areas of the part being formed. The restraining force is the force restraining the material of the part being pulled and stretched, from one or more areas of the part being held back by a blank holder, into the desired shape during the forming process. The restraining force may vary along the outer circumference of the part (and also at inner regions of the part being held by blank holders) and is influenced by a combination of the blank holder force(s), the arrangement of draw beads, and also by the shape of an addendum to the part, where such an addendum is arranged, etc. If the restraining force in a particular area of the part is too large, the material may thin out and tear, if it is too small, the material may be compressed (which may result in wrinkles or bad surface appearance). Depending on the geometry of the part, both of these undesired effects may arise in different areas of the part, so it may be necessary to find a middle value for the restraining force which minimizes the total risk of thinning and thickening. In order to do this, one may repeatedly perform a numerical simulation of a forming process, as described above, thereby varying the restraining force and other important parameters in order to find a set of parameters that gives a satisfactory result. However, this procedure is time-consuming due to the required computing power, and requires a lot of forming technology expertise.

B. Miller, R. Bond: "The practical use of simulation in the sheet metal forming industry", Wilde FEA Ltd, 2001, discloses the simulation of the deformation of a sheet metal part, wherein binder forces are varied and a visual representation of the part is generated, with different areas of the part being coloured according to formability parameters computed for the respective area.

There is a need to assist users with the choice of process parameters, in particular with the choice of restraining force.

It is therefore an object of the invention to create a method and computing system for designing a formed sheet metal part of the type mentioned initially, which overcomes the disadvantages mentioned above.

These objects are achieved by a method and computing system as defined in the appended caims.

A value that is representative of the area of a region can be computed as the surface area of this region on the part, or as an equivalent value such as the volume of the region, and/or as an approximation, obtained e.g. by counting grid or raster points of the computational model. For the sake of simplicity, the term "area" shall be used for such representative values as well.

As a result, it now is possible to simulate, in the initial design phase of the shape of a formed part, in a simplified computation procedure, the essential effect of the restraining force on the quality of the formed part after the forming process. A visual representation of the conflicting quality aspects related to thickening and thinning effects is provided, which allows a user to assess whether the overall quality is sufficient and, should it not be sufficient, provides guidance as to how the design should be modified in order to improve overall quality.

The term "thickening effects" is used in the present application as a summary for the effects of a (locally) too small restraining force, such effects being, with increasing order of severity: insufficient stretching, compression, thickening of the sheet metal material. Corresponding regions of the part, in which such effects are expected to occur, according to the simulation, are called risk regions related to thickening. Note that the term "thickening effects" does not necessarily mean that the material becomes thicker in each case; in particular it also includes thinned regions with insufficient stretching or with compression.

The term "thinning effects" is used in the present application as a summary for the effects of a (locally) too large restraining force, such effects being, with increasing order of severity: risk of splitting, excessive thinning, tearing or splitting of the sheet metal material. Corresponding regions of the part, in which such effects are expected to occur, according to the simulation, are called risk regions related to thinning. Note that the term "thinning effect" does not necessarily mean that the material becomes thinner in each case; in particular it also includes cracks in thickened regions.

The method can be used by the designer of a part who knows about the basic issues related to thinning and thickening, but should not be bothered with details of the forming process design, which will be considered at a later stage by a tool designer. It is sufficient if the user receives an approximate indication of the feasibility of the part, and, if the risks in forming the part are too high, receives information about where and how the part may be modified in order to improve manufacturability.

By means of the inventive method and system, the user can quickly assess the risks involved in the forming of the part, and can decide, according to the quality requirements he is given, whether there is, in principle, a restraining force with which the part can be formed without too much total risk due to thinning and thickening. If this is not the case, the diagram gives an indication whether it is advisable and possible to decrease the size of the thinning-related or of the thickening-related risk regions. After modification of the target geometry, the diagram allows a designer to check the new distribution of the areas of the risk regions and to determine whether there now is an acceptable restraining force.

In a preferred embodiment, the diagram plots, along a first axis, the varied restraining force, and along a second axis, for each value of the varied restraining force, the relative sizes of the regions. This is preferably done in a sequence ordered according to the degree of the thickening and thinning effect, beginning with areas exhibiting the most thickening and ending with areas exhibiting the most thinning, or vice versa. As a result, the diagram shows a series of bands, one above the other, each corresponding to a particular type or degree of risk associated with thickening and thinning. For each value of the restraining force, the width (or height, depending on point of view) of the band shows the relative size of the regions associated with the different risks, or being classified as "safe"; that is, without a particular risk classification.

In a preferred embodiment, a number of simulations for different restraining forces are performed, the areas of the different risk regions are computed, and further values of areas are computed by interpolating them over the restraining force.

In a preferred embodiment, the method comprises the further step of automatically determining an optimum of the varied restraining force as a function of at least one of an upper limit and a lower limit for the restraining force. The upper limit is the largest restraining force for which no thinning effects occur or the area or magnitude of thinning effects does not exceed a predetermined limit, the lower limit is the smallest restraining force for which no thickening effects occur or the area or magnitude of thickening effects does not exceed a predetermined limit. For example, the optimum is determined by selecting the smallest restraining force for which the relative size of an area that is classified as being safe exceeds a predetermined value, such as one third of the total area of the part (in general "predetermined" values are determined e.g. by user preferences or by manufacturers guidelines). In another preferred embodiment, the optimum is determined as the highest restraining force for which no cracks appear, or no thinning effects occur. In another preferred embodiment, the optimum is determined as the average of the largest restraining force for which no thinning effects occur and the smallest restraining force for which no thickening effects occur. If the latter is larger than the former, then the latter may be chosen.

In a preferred embodiment, the step of the simulation module performing the simulation procedure comprises the simulation module performing a reverse one-step simulation which computes the deformation from the target geometry of the part after the forming process to the initial geometry of the part prior to the forming process, and thereby computes the thinning and thickening effects of the forming process on the part. The initial geometry typically is that of a flat sheet metal blank.

In a preferred embodiment, the simulation is performed with the varied restraining force being applied around the complete circumference of the part.

In another preferred embodiment, the varied restraining force is applied to one or more predetermined sections of the circumference only, the restraining force in the remaining sections being assumed to have a constant value, in particular a value of zero. This allows a designer to work with parts having several separate blank holders, or with parts that are held only along part of the circumference or to take draw beads and other measures for changing the restraining forces into account.

In a preferred embodiment, the part comprises holes. When manufacturing the part, an inner blank holder is arranged around the hole, holding the sheet metal during the forming process. Correspondingly, in the simulation the effect of the inner blank holder is simulated as well. The circumference of the part then can be considered to comprise both the outer circumference and the (inner) circumferences of one or more holes. The force for this inner blank holder may be the same as and varied along with the varied restraining force of the outer blank holder. Alternatively, the force for this inner blank holder may equal a constant force (zero force corresponding to no inner blank holder being present).

In a preferred embodiment, a computer program product for the simulation of sheet-metal-forming processes is loadable into an internal memory of a digital computer or a computer system, and comprises computer-executable instructions to cause one or more processors of the computer or computer system execute the simulation method. In another preferred embodiment, the computer program product comprises a computer readable medium having the computer-executable instructions recorded thereon. The computer readable medium preferably is non-transitory; that is, tangible. In still another preferred embodiment, the computer program is embodied as a reproducible computer-readable signal, and thus can be transmitted in the form of such a signal.

Further preferred embodiments are evident from the dependent patent claims.

### BRIEF DESCRIPTION OF THE DRAWINGS

The subject matter of the invention will be explained in more detail in the following text with reference to exemplary embodiments which are illustrated in the attached drawings, in which:
- Fig. 1: schematically shows a structure of a system according to a preferred embodiment;
- Fig. 2: shows a flow diagram of a corresponding method;
- Fig. 3: schematically shows the display of a formed part; and
- Figs. 4, 5: schematically shows the display of a diagram showing relative size of regions of the part having predetermined characteristics as a function of a varied restraining force.

The reference symbols used in the drawings, and their meanings, are listed in summary form in the list of reference symbols. In principle, identical parts are provided with the same reference symbols in the figures.

### DETAILED DESCRIPTION

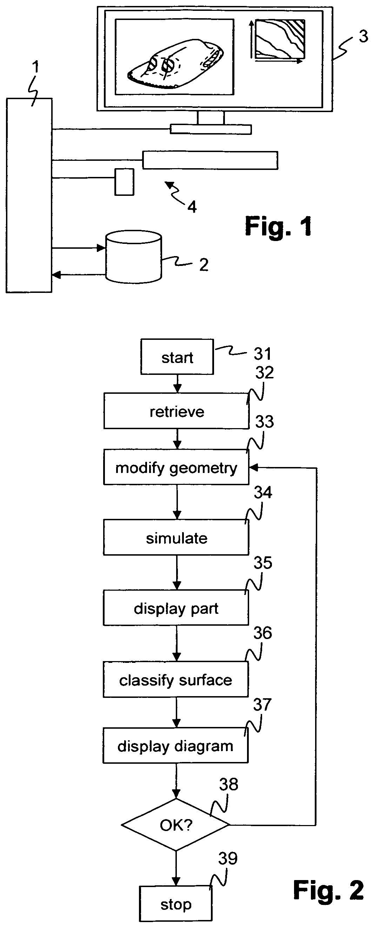

**Fig. 1** schematically shows a structure of a preferred embodiment of a computing system for designing a formed sheet metal part; with a processing unit 1 operatively coupled to a display 3 and a persistent storage unit 2, as well as input devices 4 such as a keyboard and/or pointing device, such as a computer mouse. The processing unit 1 comprises a processor and random access memory.

The computer system is programmed to execute, among others, a method for designing a formed sheet metal part, according to the flow diagram of **Fig. 2**. The method steps displayed therein take place as one sub-part of a complete part design procedure. After a start and initialization step 31, in a retrieval and preparation step 32 a user of the computer system, interactively designs or loads from memory a numerical model of a formed sheet metal part. In a further step 33 the user may modify the modeled geometry. This modeled geometry is the target geometry of a sheet metal part that is to be formed by deforming the part, starting from an initial geometry. In step 34, a simulation of the part deformation corresponding to this forming process that generates the target geometry is performed. The simulation determines among others, characteristic variables or performance variables such as the thickening and thinning of the part by the forming process. In step 35, a visual representation of the part in the target geometry is computed and displayed, including a visualization of the values of the performance variables overlaid onto the depiction of the part, which allows showing part regions in which the performance variables have predetermined values or lie within predetermined ranges. These values or ranges preferably have been specified according to the material of the part, or are entered by the user. In step 36, the points of the part, typically points on the surface of the part, are classified as belonging to one of several regions, wherein each region is associated with a particular value or range of the performance variables, and the area of each of these regions is computed. In step 37, a diagram is computed and displayed, the diagram showing the relative size or areas of these part regions. In step 38, according to user input, the method may branch back to allow the further, iterative modification of the target geometry according to step 33, or may branch to the termination 39 of this aspect of the part-design procedure.

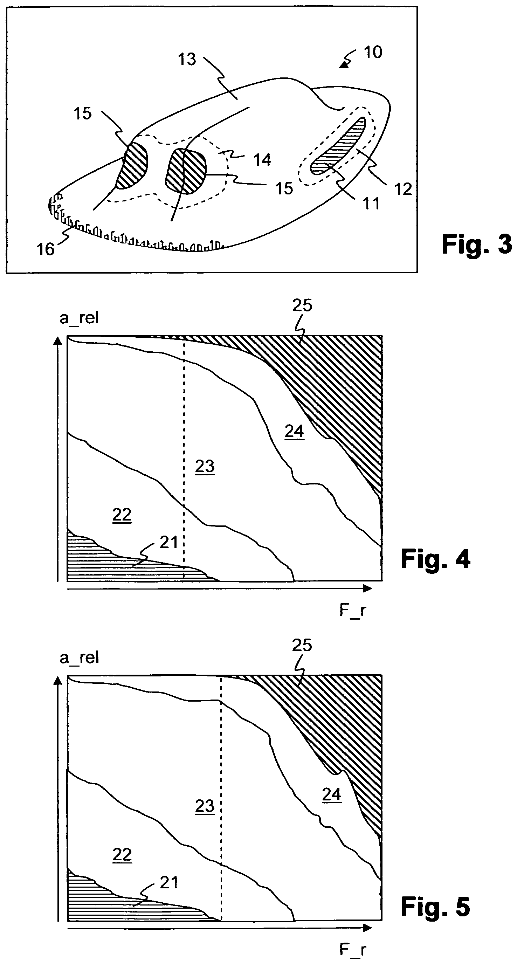

**Fig. 3** schematically shows a visualization of a formed part 10 as computed in step 34 and displayed on display 3. The visualization of the formed part 10 comprises overlays, typically in color (represented in Fig. 3 by hatching), indicating that a predetermined performance variable, on the corresponding region of the part, lies within a predetermined range. In the present example, the performance variable indicates thinning and thickening effects, and the related regions are:
- a first region 11 in which the simulation shows a thickening or a compression of the sheet metal to take place;
- a second region 12 in which insufficient stretching takes place;
- a third region 13, classified as "safe";
- a fourth region 14, in which excessive thinning takes place;
- a fifth region 15, in which tearing or splitting of the material takes place.

The first, second, fourth and fifth regions are considered to be "risk regions". The third, "safe" region is the remainder of the part, in which neither unsafe thinning nor unsafe thickening takes place.

One or more sixth regions 16 may exist in edge regions of the part, in which the simulation shows excessive thinning or splitting. Such regions usually are artifacts of the simulation procedure and do not correspond to an actual risk in the real part. For this reason, in a preferred embodiment of the invention, edge regions of the part are not displayed as being the risk region computed by the simulation, but are classified and displayed (colored, e.g.) in the same way as the area of the part lying inwards of the respective edge region, or are completely excluded from classification and not taken into account in the further evaluations. The width of an edge region may be automatically chosen; e.g., as a predetermined multiple of the material thickness.

While the display according to **Fig. 3** shows the spatial distribution of risk areas on the part for a single value of the restraining force, the display depicted in **Fig. 4** allows for an assessment of the influence of varying restraining force on risk areas:
**Fig. 4** schematically shows the display of a diagram showing the relative size **a_rel** of areas of the regions of the part having predetermined characteristics as a function of a varied restraining force **F_r**. A first 21, second 22, third 23, fourth 24, and fifth band 25 indicate the relative area of the respective regions on the part, for varying **F_r**. Along a vertical line, such as the dashed line, the relative size of these regions, for one particular value of **F_r**, is visible. It is immediately evident, going from left to right along the horizontal axis, that for the smallest **F_r**, there is no significant tearing, but a large area with thickening-related risk. With increasing **F_r**, the proportion of thickening-related risks 21, 22 decreases while the proportion of thinning-related risks 24, 25 increases. It is further immediately visible whether there exists a value of **F_r** for which there is an acceptable tradeoff between thinning and thickening risks, or whether the part geometry needs to be redesigned.

For example, manufacturer guidelines for a particular product may stipulate that the area labeled as "safe" should be at least 30%, that the area of the first region should be less than 10%, and that the area of the fifth region 15 should be less than 2%. In view of the diagram of Fig. 4, the user may choose to unsharpen the shape of the part 10 in the fifth regions 15 (e.g. by increasing the part fillet radii). He will expect this to cause, for most restraining force values, a reduction of the size of the fifth regions 15 and presumably also of the fourth region 14.

**Fig. 5** shows the diagram of **Fig. 4** after such a change to the part geometry: The dividing lines between the third band 23 and fourth band 24 and between the fourth band 24 and fifth band 25 have moved upwards, corresponding to the fact that the unsharpened part has less of a tendency towards thinning and splitting. A vertical dashed line corresponding to a restraining force with an acceptable overall risk has moved to the right, to higher restraining forces, and the associated distribution of risks comprises hardly any risk of thickening (corresponding to the first band 21) or of splitting (fifth band 25).

While the invention has been described in present embodiments of the invention, it is distinctly understood that the invention is not limited thereto, but may be otherwise variously embodied and practiced within the scope of the claims. For example, instead of classifying the area into five types of regions, with five associated bands in the diagram, three or seven or more regions may be used.

## Claims

1. A method for reducing a total risk due to thinning and thickening when designing a formed sheet metal part formed by deep drawing, performed by a processor of a computing system, by means of a numerical model of a target geometry of the sheet metal part, the numerical model of the target geometry being modified interactively by a user, the method comprising the following steps:
• maintaining in computer storage (2) the numerical model of the target geometry of the part being modified;
• by the computing system (1), performing a simulation procedure,
∘ wherein the deformation of the part by a forming process that transforms the part from an initial geometry to the target geometry is computed,
∘ wherein thinning and thickening effects of the forming process on the part are computed as a function of restraining force, wherein thinning effects are effects of a too large restraining force and thickening effects are effects of a too small restraining force, and
∘ wherein the computation steps for the part deformation and the part thinning and thickening effects are repeated for different values of the restraining force;
• on the display device (3), displaying a visual representation (10) of the part subjected to the simulated forming process, including a visual representation of the thickening and thinning effects on the visual representation of regions (11, 12, 13, 14, 15) of the part that are affected by said thickening and thinning effects;
• by the computing system, classifying the surface of the part as having several regions,
∘ wherein each region is associated with a particular range of the thickening and thinning effects, and
**characterized in that** the method further comprises:
∘ that for each of these regions, a value that is representative of the area of the region is computed; and
• by the computing system (1), computing and displaying on the display device (3) a diagram displaying the relative size of the values that are representative of the areas of these regions (11, 12, 13, 14, 15), as a function of the restraining force, thereby indicating whether there is a restraining force with which the part can be formed without too much total risk due to thinning and thickening;
• by the computing system (1), according to user input, based on the diagram, terminating the method or performing a further, iterative modification of the target geometry, and a further execution of the method.

2. The method of claim 1, comprising the step of, by the computing system, plotting in the diagram, along a first axis, the varied restraining force, and along a second axis, for each value of the restraining force, the relative sizes of the regions.

3. The method of claim 1 or claim 2, comprising the step of, by the computing system (1), plotting the relative sizes of the regions (11, 12, 13, 14, 15) in a sequence ordered according to the degree of the thickening and thinning effect, beginning with regions exhibiting the most thickening and ending with regions exhibiting the most thinning, or vice versa.

4. The method of claim 2, comprising the further step of, by the computing system (1), automatically determining an optimum of the restraining force as a function of at least one of an upper limit and a lower limit for the restraining force.

5. The method of one of the preceding claims, wherein the step of the computing system (1) performing the simulation procedure comprises performing a reverse one-step simulation which computes the deformation from the target geometry of the part after the forming process to the initial geometry of the part prior to the forming process, and thereby computes the thinning and thickening effects of the forming process on the part.

6. The method of one of claims 1 to 5, wherein, in the simulation of the forming process, the restraining force being varied is simulated to apply to the entire circumference of the part.

7. The method of one of claims 1 to 5, wherein, in the simulation of the forming process, the restraining force being varied is simulated to apply to predetermined sections of the circumference of the part only, with the restraining force in the remaining sections being assumed to have a constant value, in particular a value of zero.

8. A non-transitory computer readable medium comprising computer-executable instructions which when executed by a processor of a computing system (1), cause the computing system (1) to perform the method steps of one of claims 1 to 7.

9. A computing system (1) programmed to perform the method steps of one of claims 1 to 7.

10. Method of manufacturing a non-transitory computer readable medium, comprising the step of storing, on the computer readable medium, computer-executable instructions which when executed by a processor of a computing system, cause the computing system to perform the method steps of one of claims 1 to 7.

## Patentansprüche

1. Verfahren zum Reduzieren eines Gesamtrisikos aufgrund von Verdünnung und Verdickung beim Entwerfen eines durch Tiefziehen geformten Blechformteils, das von einem Prozessor eines Computersystems mithilfe eines numerischen Modells einer Zielgeometrie des Blechformteils durchgeführt wird, wobei das numerische Modell der Zielgeometrie von einem Benutzer interaktiv modifiziert wird und das Verfahren die folgenden Schritte aufweist:
• Beibehalten des numerischen Modells der Zielgeometrie des Teils, das modifiziert wird, im Computerspeicher (2);
• Durchführen einer Simulationsprozedur durch das Computersystem (1),
∘ wobei die Verformung des Teils durch einen Formungsprozess, der das Teil von einer Anfangsgeometrie in die Zielgeometrie umwandelt, berechnet wird,
∘ wobei die Verdünnungs- und Verdickungseffekte des Formungsprozesses an dem Teil als Funktion der Rückhaltekraft berechnet werden, wobei die Verdünnungseffekte Effekte einer zu großen Rückhaltekraft und die Verdickungseffekte Effekte einer zu kleinen Rückhaltekraft sind, und
∘ wobei die Berechnungsschritte für die Teilverformung und die Teilverdünnungs- und - verdickungseffekte für verschiedene Werte der Rückhaltekraft wiederholt werden;
• Anzeigen einer visuellen Darstellung (10) des dem simulierten Formungsprozess unterzogenen Teils auf der Anzeigevorrichtung (3), einschließlich einer visuellen Darstellung der Verdickungs- und Verdünnungseffekte auf die visuelle Darstellung von Regionen (11, 12, 13, 14, 15) des Teils, die von den genannten Verdickungs- und Verdünnungseffekten betroffen sind;
• Klassifizieren der Oberfläche des Teils in verschiedene Regionen durch das Computersystem,
∘ wobei jede Region einem bestimmten Bereich der Verdickungs- und Verdünnungseffekte zugeordnet ist, **dadurch gekennzeichnet, dass** das Verfahren darüber hinaus Folgendes aufweist:
∘ dass für jede dieser Regionen ein Wert berechnet wird, der repräsentativ für die Fläche der Region ist; und
• Berechnen und Anzeigen eines Diagramms durch das Computersystem (1) auf der Anzeigevorrichtung (3), das die relative Größe der Werte, die für die Flächen dieser Regionen (11, 12, 13, 14, 15) repräsentativ sind, als Funktion der Rückhaltekraft anzeigt, wodurch angegeben wird, ob es eine Rückhaltekraft gibt, mit der das Teil ohne ein zu großes Gesamtrisiko aufgrund von Verdünnung und Verdickung geformt werden kann;
• durch das Computersystem (1), entsprechend einer Benutzereingabe basierend auf dem Diagramm, Beenden des Verfahrens oder Durchführen einer weiteren, iterativen Modifizierung der Zielgeometrie und ein weiteres Ausführen des Verfahrens.

2. Verfahren nach Anspruch 1, das den Schritt des Plottens der variierten Rückhaltekraft entlang einer ersten Achse und der relativen Größen der Regionen für jeden Wert der Rückhaltekraft entlang einer zweiten Achse durch das Computersystem in das Diagramm aufweist.

3. Verfahren nach Anspruch 1 oder Anspruch 2, das den Schritt des Plottens der relativen Größen der Regionen (11, 12, 13, 14, 15) durch das Computersystem (1) in einer Reihenfolge aufweist, die nach dem Grad des Verdickungs- und Verdünnungseffekts geordnet ist, beginnend mit Regionen, die die größte Verdickung aufweisen und endend mit Regionen, die die kleinste Verdickung aufweisen, oder umgekehrt.

4. Verfahren nach Anspruch 2, das den weiteren Schritt des automatischen Bestimmens eines Optimums der Rückhaltekraft durch das Computersystem (1) als Funktion einer oberen Grenze und/oder einer unteren Grenze für die Rückhaltekraft aufweist.

5. Verfahren nach einem der vorhergehenden Ansprüche, wobei der Schritt des Computersystems (1) zum Durchführen der Simulationsprozedur das Durchführen einer umgekehrten einstufigen Simulation aufweist, die die Verformung von der Zielgeometrie des Teils nach dem Formungsprozess zu der Anfangsgeometrie des Teils vor dem Formungsprozess berechnet und somit die Verdünnungs- und Verdickungseffekte des Formungsprozesses an dem Teil berechnet.

6. Verfahren nach einem der Ansprüche 1 bis 5, wobei in der Simulation des Formungsprozesses die Rückhaltekraft, die variiert wird, in der Simulation auf den gesamten Umfang des Teils angewendet wird.

7. Verfahren nach einem der Ansprüche 1 bis 5, wobei in der Simulation des Formungsprozesses die Rückhaltekraft, die variiert wird, in der Simulation nur auf vorbestimmte Abschnitte des Umfangs des Teils angewendet wird, wobei für die Rückhaltekraft in den verbleibenden Abschnitten angenommen wird, dass sie einen konstanten Wert hat, insbesondere einen Wert Null.

8. Nicht flüchtiges, computerlesbares Medium, das computerausführbare Anweisungen aufweist, die beim Ausführen durch einen Prozessor auf einem Computersystem (1) das Computersystem (1) dazu veranlassen, die Verfahrensschritte nach einem der Ansprüche 1 bis 7 durchzuführen.

9. Computersystem (1), das zum Durchführen der Verfahrensschritte nach einem der Ansprüche 1 bis 7 programmiert ist.

10. Verfahren zum Fertigen eines nicht flüchtigen, computerlesbaren Mediums, aufweisend den Schritt des Speicherns, auf dem computerlesbaren Medium, von computerausführbaren Anweisungen, die beim Ausführen durch einen Prozessor auf einem Computersystem das Computersystem dazu veranlassen, die Verfahrensschritte nach einem der Ansprüche 1 bis 7 durchzuführen.

## Revendications

1. Procédé de réduction du risque total dû à l'amincissement et à l'épaississement lors de la conception d'une pièce façonnée en tôle métallique, réalisée par un processeur d'un système de calcul au moyen d'un modèle numérique d'une géométrie cible de la pièce façonnée en tôle métallique, le modèle numérique de la géométrie cible étant modifié de manière interactive par un utilisateur, le procédé comprenant les étapes suivantes :
- conserver dans une mémoire informatique (2) le modèle numérique de la géométrie cible de la pièce à modifier,
- faire réaliser par le système de calcul (1) une opération de simulation dans laquelle
- la déformation de la pièce par une opération de façonnage qui fait passer la pièce d'une géométrie initiale à la géométrie cible est calculée,
- les effets d'amincissement et d'épaississement de la pièce sont calculés en fonction de la force de contrainte, les effets d'amincissement étant les effets d'une force de contrainte trop élevée et les effets d'épaississement étant les effets d'une force de contrainte trop basse et
- les étapes de calcul de la déformation de la pièce et des effets d'amincissement et d'épaississement de la pièce étant répétées pour différentes valeurs de la force de contrainte,
- afficher sur le dispositif d'affichage (3) une représentation visuelle de la pièce subissant l'opération de façonnage simulée, notamment une représentation visuelle des effets d'amincissement et d'épaississement dans le représentation visuelle de régions (11, 12, 13, 14, 15) de la pièce qui sont affectées par lesdits effets d'amincissement et d'épaississement,
- faire classer la surface de la pièce par le système de calcul en plusieurs régions,
- chaque région a associée à une plage particulière d'effets d'amincissement et d'épaississement, **caractérisé en ce que**
le procédé comprend en outre les étapes qui consistent à :
- pour chacune de ces régions, calculer une valeur représentative de la superficie de la région,
- faire calculer par le système de calcul (1) et afficher sur le dispositif d'affichage (3) un diagramme qui présente la grandeur relative des valeurs qui représentent les superficies des régions (11, 12, 13, 14, 15) en fonction de la force de contrainte pour ainsi indiquer s'il existe une force de contrainte qui permet de façonner la pièce sans risque total trop élevé d'amincissement et d'épaississement,
- faire terminer le procédé par le système de calcul (1), selon une commande introduite par l'utilisateur et sur base du diagramme ou lui faire exécuter une autre modification itérative de la géométrie cible et poursuivre l'exécution du procédé.

2. Procédé selon la revendication 1, comprenant l'étape qui consiste à amener le système de calcul à reporter les variations de la force de contrainte sur un premier axe du diagramme et les tailles relatives des régions sur un deuxième axe du diagramme pour chaque valeur de la force de contrainte.

3. Procédé selon la revendication 1 ou la revendication 2, comprenant l'étape qui consiste à amener le système de calcul (1) à reporter les tailles relatives des régions (11, 12, 13, 14, 15) dans une succession ordonnée en fonction du degré de l'effet d'amincissement et d'épaississement et commençant par les régions qui présentent l'épaississement le plus fort et en terminant par les régions qui présentent l'amincissement le plus fort ou inversement.

4. Procédé selon la revendication 1, comprenant l'étape qui consiste à amener le système de calcul (1) à déterminer automatiquement un optimum de la force de contrainte en fonction d'une limite supérieure et/ou d'une limite inférieure de la force de contrainte.

5. Procédé selon l'une des revendications précédentes, dans lequel l'étape qui consiste à amener le système de calcul (1) à exécuter l'opération de simulation comprend l'exécution d'une simulation inverse en une étape qui calcule la déformation depuis la géométrie cible de la pièce après l'opération de façonnage jusqu'à la géométrie initiale de la pièce avant l'opération de façonnage, pour ainsi calculer les effets d'amincissement ou d'épaississement de l'opération de façonnage de la pièce.

6. Procédé selon l'une des revendications 1 à 5, dans lequel la force de contrainte que l'on fait varier dans la simulation de l'opération de façonnage est simulée de manière à s'appliquer sur toute la circonférence de la pièce.

7. Procédé selon l'une des revendications 1 à 5, dans lequel la force de contrainte que l'on fait varier dans la simulation de l'opération de façonnage est simulée de manière à s'appliquer uniquement sur des sections prédéterminées de la circonférence de la pièce, la force de contrainte dans les autres sections étant supposée conserver une valeur constante et en particulier la valeur de zéro.

8. Support de mémoire non volatile lisible par ordinateur, comprenant des instructions exécutable par ordinateur qui, lorsqu'elles sont exécutées par un processeur d'un système de calcul (1), amènent le système de calcul (1) à exécuter les étapes du procédé selon l'une des revendications 1 à 7.

9. Système informatique (1) programmé pour exécuter les étapes du procédé selon l'une des revendications 1 à 7.

10. Procédé de fabrication d'un support de mémoire non volatile lisible par ordinateur, le procédé comprenant l'étape qui consiste à conserver sur le support de mémoire lisible par ordinateur des instructions exécutable par ordinateur qui, lorsqu'elles sont exécutées par un processeur d'un système de calcul (1), amènent le système de calcul (1) à exécuter les étapes du procédé selon l'une des revendications 1 à 7.
